# EUROPÄISCHE PATENTANMELDUNG

(11) **EP 1 074 756 A2**
(43) Veröffentlichungstag der Anmeldung: **07.02.2001**
(21) Anmeldenummer: 00116542.2
(22) Anmeldetag: 31.07.2000
(51) Int. Cl.: F16D 65/092

(54) **Scheibenbremse**

(30) Priorität: 03.08.1999 DE 19936394
(71) Anmelder: WABCO Perrot Bremsen GmbH, 68222 Mannheim (DE)
(72) Erfinder: Antony, Paul, 67550 Worms (DE)
(74) Vertreter: Patentanwälte Leinweber & Zimmermann

(57) **Zusammenfassung**

Es wird eine Scheibenbremse für ein Landfahrzeug beschrieben, mit einer Bremsscheibe, mindestens einem Bremsbelag, der bei Betätigung der Bremse in einer vorbestimmten Richtung gegen die Bremsscheibe gedrückt wird, und mindestens einem Belagträger, der den Bremsbelag unmittelbar trägt und die beim Bremsen an dem Bremsbelag auftretenden Reibkräfte aufnimmt.

Nach der Erfindung ist vorgesehen, daß der Bremsbelag in einer Durchgangsöffnung in dem Belagträger angeordnet ist,
daß die bei Betätigung der Bremse auftretende Zuspannkraft zwar auf den Bremsbelag, nicht aber auf den Belagträger wirkt und
daß der Belagträger im Betrieb bezüglich einer Bewegung in der vorbestimmten Richtung mit dem Bremsbelag gekoppelt ist.

## Beschreibung

Die Erfindung betrifft eine Scheibenbremse für ein Landfahrzeug, mit
einer Bremsscheibe,
mindestens einem Bremsbelag, der bei Betätigung der Bremse in einer vorbestimmten Richtung gegen die Bremsscheibe gedrückt wird, und
mindestens einem Belagträger, der den Bremsbelag unmittelbar trägt und die beim Bremsen an dem Bremsbelag auftretenden Reibkräfte aufnimmt.

Scheibenbremsen der eingangs genannten Art sind bekannt, beispielsweise aus der DE 39 06 450 A1. Dabei wird als Belagträger im Sinne der Erfindung nur die in der DE 39 06 450 A1 gezeigte Trägerplatte 1 angesehen, nicht aber etwaige Führungsbolzen im Bremssattel, an denen die Trägerplatte mittels Schlitzen 13 aufgehängt ist. Diese Führungsbolzen dienen nämlich zwar auch zum Tragen des Bremsbelags, tragen ihn aber nicht "unmittelbar", wie das bei der Trägerplatte 1 der Fall ist.

Nach der DE 30 06 450 A1 bilden der Bremsbelag und der Belagträger zusammen den sogenannten Bremsbacken. Dabei ist der Bremsbelag durch heißes Aufpressen an der Trägerplatte unlösbar befestigt. Mithin kann beim Betätigen der Bremse der Bremsbelag nur durch Ausüben von Zuspannkraft auf den Belagträger gegen die Bremsscheibe gedrückt werden.

Die Herstellung des aus dem Stand der Technik bekannten Bremsbacken ist sehr aufwendig. Darüber hinaus muß bei Erreichen der Verschleißgrenze nicht nur der Bremsbelag, sondern auch der Belagträger ausgetauscht werden, was äußerst unwirtschaftlich ist. Schließlich wird bei den beschriebenen Bremsen nach dem Stand der Technik immer wieder als Ergebnis des Einwirkens der Zuspannkraft eine Durchbiegung des Belagträgers beobachtet, die sich wegen dessen fester Verbindung mit dem Bremsbelag auch auf den Bremsbelag auswirkt, so daß keine optimale Anlage an der Bremsscheibe mehr gegeben ist.

Aus der DE 42 20 630 C1 ist eine Bremse der eingangs genannten Art bekannt, bei der der Bremsbelag nicht dauerhaft an dem Belagträger befestigt ist, sondern in eine entsprechende Ausnehmung eingesteckt ist. Zwar muß daher bei Verschleiß des Bremsbelages nicht auch der Belagträger ausgetauscht werden, da aber auch hier die Zuspannkraft über den Belagträger auf den Bremsbelag übertragen wird, besteht die bereits oben beschriebene Gefahr des Durchbiegens.

Ähnliches gilt für die aus der DE 43 01 006 A1 bekannte Bremse. Auch hier ist nämlich der Bremsbelag in eine Vertiefung in dem Belagträger eingesteckt, die Zuspannkraft wird aber über den Belagträger auf den Bremsbelag übertragen.

Bei den Bremsen nach dem DE-GM 18 87 149 und der DE-AS 1 242 107 wirkt die bei Betätigung der Bremse auftretende Zuspannkraft nicht auf den Belagträger, sondern direkt auf den Bremsbelag. Dabei ist der Bremsbelag verschieblich gegenüber dem Belagträger gehalten, wohingegen der Belagträger ortsfest bezüglich der Bremsscheibe gehalten ist. Bei diesen Bremsen besteht mithin die Gefahr, daß infolge von Verspannungen, Verklemmungen oder dgl. ein ungehindertes Verschieben des Bremsbelags bezüglich des Belagträgers nicht gewährleistet ist, was die Funktionsfähigkeit der Bremse beeinträchtigt.

Ähnliches gilt im Hinblick auf die Bremse nach der von der Anmelderin der vorliegenden Anmeldung am 22. Mai 1998 hinterlegten Deutschen Patentanmeldung 198 23 016. Denn auch dabei ist der Bremsbelag bezüglich des Belagträgers verschieblich gehalten.

Es ist Aufgabe der Erfindung, eine Scheibenbremse der eingangs genannten Art anzugeben, bei der weder die Gefahr des Durchbiegens des Belagträgers noch die Gefahr eines Verklemmens des Bremsbelags an dem Belagträger besteht.

Erfindungsgemäß wird die gestellte Aufgabe dadurch gelöst, daß bei einer Scheibenbremse der eingangs genannten Art
a) der Bremsbelag in einer Durchgangsöffnung in dem Belagträger angeordnet ist,
b) die bei Betätigung der Bremse auftretende Zuspannkraft zwar auf den Bremsbelag, nicht aber auf den Belagträger wirkt und
c) der Belagträger im Betrieb bezüglich einer Bewegung in der vorbestimmten Richtung mit dem Bremsbelag gekoppelt ist.

Da keine dauerhafte Befestigung des Bremsbelages an dem Belagträger erforderlich ist, ist die Herstellung insgesamt vereinfacht. Ferner kann der Bremsbelag bei Erreichen seiner Verschleißgrenze ausgetauscht werden, ohne daß es auch gleichzeitig eines Austauschs des Belagträgers bedürfte. Da die Zuspannkraft nicht auf den Belagträger, sondern direkt auf den Bremsbelag wirkt, besteht nicht die Gefahr des Durchbiegens des Belagträgers, was sich auf die Anlage des Bremsbelages an der Bremsscheibe beim Bremsen nachteilig auswirken würde. Da schließlich der Belagträger beim Zuspannen, d.h. beim Bewegen des Bremsbelages in der vorbestimmten Richtung mitbewegt wird, ohne daß eine dauerhafte Befestigung des Bremsbelages an dem Belagträger vorgesehen ist, besteht nicht die Gefahr, daß eine eventuelle Verklemmung des Bremsbelages in dem Belagträger zu einer Beeinträchtigung der Funktionsfähigkeit der Bremse führt.

Die Einleitung der Zuspannkraft direkt in den Bremsbelag und nicht über den Belagträger resultiert im übrigen in einer besseren Krafteinleitung bei eventuellen Sattelverformungen.

Bevorzugt bildet die Begrenzungswand der Durchgangsöffnung einen den Bremsbelag in einer parallel zur Hauptebene der Bremsscheibe liegenden Ebene vollständig umschließenden Rahmen. Dadurch ist in jedem Fall eine exakte Halterung des Bremsbelages durch den Belagträger sichergestellt. Demgegenüber könnte bei einer Verschieblichkeit des Bremsbelages gegenüber dem Belagträger die Gefahr bestehen, daß der Bremsbelag aus der Führung herausfällt, wenn die Verschleißgrenze unterschritten wird.

Der Bremsbelag hat erfindungsgemäß bevorzugt zumindest abschnittweise eine Außenkontur, die durch die Durchgangsöffnung hindurchpaßt. Dadurch ist die Montage insofern vereinfacht, als der Bremsbelag in die Durchgangsöffnung eingesteckt werden kann.

Besonders bevorzugt ist es dabei, daß ein im eingebauten Zustand der Bremsscheibe zugewandter Endabschnitt des Bremsbelages eine Außenkontur hat, die durch die Durchgangsöffnung hindurchpaßt. Auf diese Weise ist gewährleistet, daß der Bremsbelag von der der Bremsscheibe abgewandten Seite her eingesteckt werden kann.

Nach einer besonders einfachen Ausführungsform der Erfindung ist vorgesehen, daß sich der Belagträger und der Bremsbelag mit jeweils einem der Bremsscheibe abgewandten Anlagebereich an einem sich beim Zuspannen mit dem Bremsbelag bewegenden Element abstützen. Wenngleich auch bei dieser Ausführungsform die Zuspannkraft nur auf den Bremsbelag, nicht aber auf den Belagträger wirkt, wird doch der Belagträger beim Zuspannen zusammen mit dem Bremsbelag in der vorbestimmten Richtung, d.h. in Richtung der Bremsscheibe bewegt. Eine das Bremsen eventuell beeinträchtigende Relativbewegung zwischen dem Bremsbelag und dem Belagträger findet nicht statt.

Zusätzlich oder alternativ kann erfindungsgemäß eine Halterung des Belagträgers zum Koppeln mit dem Bremsbelag bezüglich einer Bewegung in der vorbestimmten Richtung vorgesehen sein. Durch diese Halterung wird der Belagträger zuverlässig synchron mit dem Bremsbelag geführt.

Dabei kann die Halterung den Belagträger an einem sich beim Zuspannen mit dem Bremsbelag bewegenden Element halten. Diese Ausgestaltung ist besonders einfach zu realisieren.

Bevorzugt ist die Halterung lösbar. Damit ist die Gesamtanordnung reparaturfreundlicher.

Erfindungsgemäß bevorzugt ist die Halterung im Sinne einer Veränderung der in Axialrichtung der Bremse gesehenen Relativlage des Belagträgers bezüglich eines sich beim Zuspannen mit dem Bremsbelag bewegenden Elements verstellbar. Bei dieser Ausgestaltung kann die Relativlage des Belagträgers entsprechend der sich durch fortschreitenden Verschleiß ändernden Belagdicke angepaßt werden, etwa im Rahmen von Regeluntersuchungen der Bremse. Auf diese Weise kann weiter Verspannungen und Verklemmungen der einzelnen Teile miteinander entgegengewirkt werden.

Erfindungsgemäß kann vorgesehen sein, daß die Durchgangsöffnung eine kreisförmige Innenkontur hat und der Bremsbelag eine im Querschnitt kreisförmige Außenkontur hat. Dadurch wird die Montage/Demontage des Bremsbelages an dem Belagträger besonders einfach.

Die Durchgangsöffnung und der Bremsbelag können aber auch beliebige andere Konturen haben. So kann beispielsweise die Durchgangsöffnung eine nierenförmige Innenkontur haben und der Bremsbelag eine im Querschnitt nierenförmige Außenkontur haben. Damit gleicht sich die Reibfläche des Bremsbelages der umlaufenden Bewegung der Bremsscheibe an.

Der Belagträger ist erfindungsgemäß bevorzugt plattenförmig, woraus ein insgesamt vergleichsweise einfacher Aufbau der Scheibenbremse resultiert.

Der Belagträger kann erfindungsgemäß zum Tragen von zwei oder mehr Bremsbelägen ausgelegt sein. Dadurch kann die Reibfläche vergrößert und damit sehr variabel entsprechend dem jeweiligen Anwendungsfall gestaltet werden. Zwischenräume zwischen benachbarten Bremsbelägen lassen eine wesentlich bessere Luftzirkulation und somit eine verbesserte Kühlfunktion zu, wodurch Schäden am Bremsbelag und/oder an der Bremsscheibe durch Überhitzung infolge von Dauerbremsungen vorgebeugt werden kann. Im übrigen können bei der Verwendung mehrerer Bremsbeläge in einem Belagträger sowohl eine einheitliche Belagkontur als auch unterschiedliche Belagkonturen in beliebigen Kombinationen eingesetzt werden.

Um neben der von dem Belagträger herrührenden Halterung noch eine weitere Halterung des Bremsbelages zu schaffen, kann es erfindungsgemäß vorgesehen sein, daß ein die Zuspannkraft auf den Bremsbelag übertragendes Element eine Ausnehmung mit einer Innenkontur hat, die der Außenkontur des in eingebautem Zustand der Bremsscheibe abgewandten Endabschnitts des Bremsbelags entspricht. Eine solche Ausnehmung gibt nämlich dem Bremsbelag weiteren Halt.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Fig. 1: eine perspektivische schematische Ansicht eines Belagträgers mit dem Bremsbelag in nicht eingesetztem Zustand,
- Fig. 2: eine geschnittene Seitenansicht eines Bremsbelages in einem Belagträger,
- Fig. 3: die Ansicht nach Fig. 1, jedoch mit drei Bremsbelägen,
- Fig. 4: eine geschnittene Draufsicht mit drei Bremsbelägen in einem Belagträger,
- Fig. 5-8: geschnittene Seitenansichten weiterer Ausführungsformen der Erfindung und
- Fig. 9: die gleiche Ansicht wie Fig. 1, jedoch mit einem Bremsbelag mit nierenförmiger Außenkontur.

Die Figuren zeigen jeweils Details von Bremsen unter Anwendung der Erfindung. Bei den Bremsen kann es sich um Sattelscheibenbremsen, insbesondere Gleitsattel-Scheibenbremsen handeln.

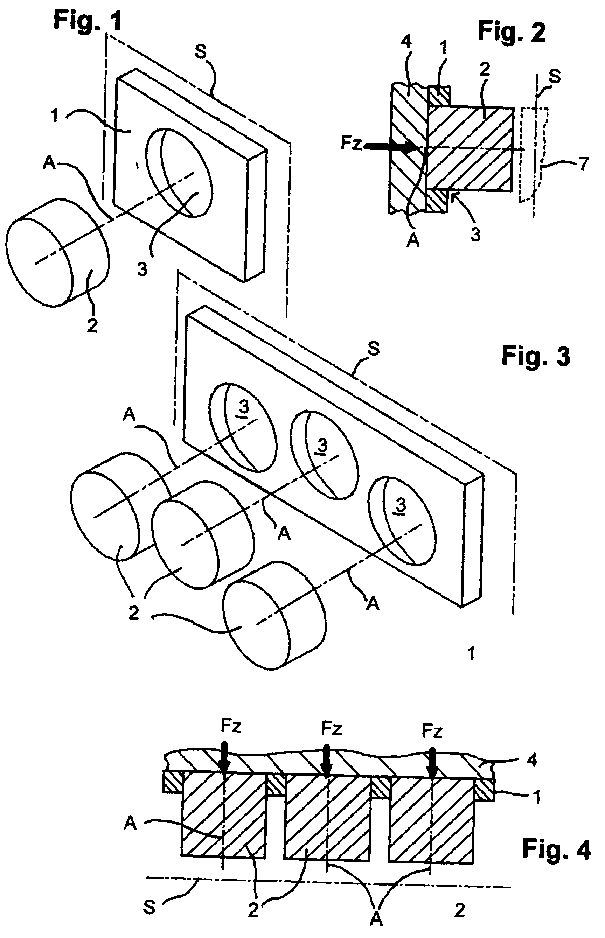

Fig. 1 zeigt einen plattenförmigen, sich parallel zu einer Bremsscheiben-Mittelebene S erstreckenden Belagträger 1 mit einer Öffnung 3, in die ein Bremsbelag 2 gleicher Kontur derart eingeschoben ist, daß er beidseitig aus dem Belagträger 1 herausragt, wobei er in noch nicht komplett montiertem Zustand durchaus noch entlang einer Verschiebeachse A bezüglich des Belagträgers 1 verschieblich ist. Gemäß Fig. 2 wird der Bremsbelag 2 zusammen mit dem Belagträger 1 verschoben, wenn auf den Bremsbelag 2 eine Zuspannkraft Fz einwirkt. Die beispielsweise von einem Sattelteil 4 ausgeübte Zuspannkraft Fz drückt den Bremsbelag 2 gegen eine Bremsscheibe 7, wobei er wegen der Anlage nicht nur den Bremsbelag 2, sondern auch den Belagträger 1 synchron mit dem Bremsbelag 2 gegen die Bremsscheibe 7 bewegt.

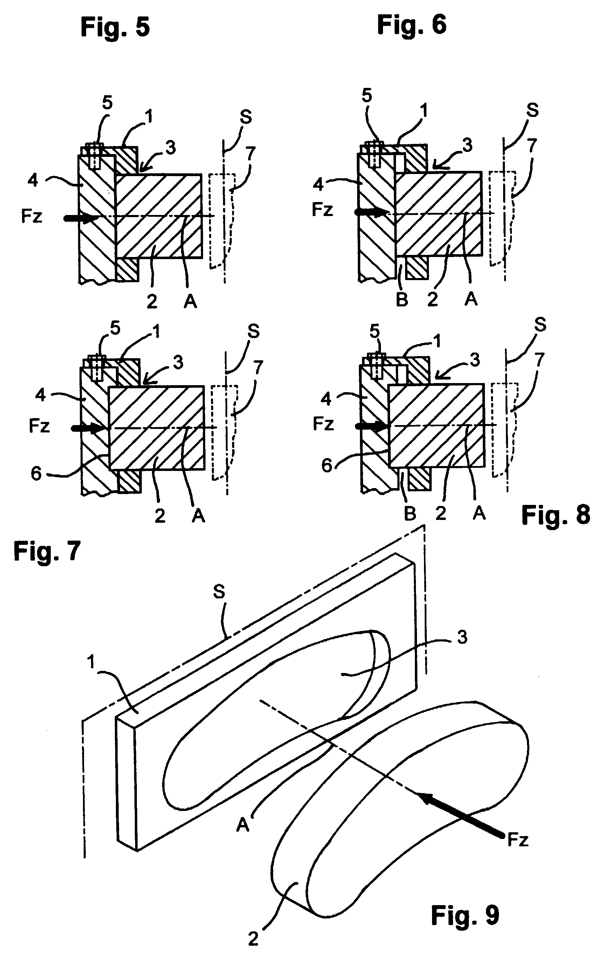

Die Figuren 3 u. 4 zeigen eine Ausführung, bei der mehr als nur ein Bremsbelag 2, nämlich drei Bremsbeläge in Öffnungen 3 eines Belagträgers 1 gehalten sind. Die Figuren zeigen runde Öffnungen und zylinderförmige Bremsbeläge mit kreisförmigem Querschnitt. Es wird jedoch ausdrücklich darauf hingewiesen, daß neben dieser sich als besonders vorteilhaft erwiesenen Form auch andere Formen und Konturen einzeln oder in Kombination möglich sind, wenn dies erforderlich sein sollte. So ist beispielsweise in Fig. 9 ein Bremsbelag 2 mit nierenförmiger Außenkontur gezeigt, der in eine ebenfalls nierenförmige Durchgangsöffnung 3 einzuschieben ist. Diese Form entspricht der Drehbewegung der Bremsscheibe 7.

Bei den Ausführungen nach den Figuren 5 bis 8 ist der Belagträger 1 jeweils mittels einer Schraube 5 an dem Sattelteil 4 gehalten. Da der Sattelteil 4 dazu dient, den Belag 2 gegen die Bremsscheibe 7 (und zurück) zu bewegen, ist bei den Ausführungen nach den Figuren 5 bis 8 eine vollständige Synchronisation der Bewegungen des Belagträgers 1 einerseits und des Bremsbelags 2 andererseits verwirklicht. Im Gegensatz zu den Figuren 5 u. 7 ist bei den Figuren 6 u. 8 vorgesehen, daß der Belagträger 1 mit seiner der Bremsscheibe 7 abgewandten Seite nicht an dem Sattelteil 4 anliegt, sondern daß zwischen dem Sattelteil 4 und dem Belagträger 1 ein Abstand B liegt. Handelt es sich bei derjenigen Durchgangsöffnung in dem Belagträger 1, durch die die Schraube 5 in den Sattelteil 4 eingeschraubt ist, um z.B. ein Langloch, so kann der Abstand B entsprechend dem Verschleiß des Bremsbelags 2 verändert werden, insbesondere verkürzt.

Die Ausführungen nach den Figuren 7 u. 8 unterscheiden sich von denjenigen nach den Figuren 5 u. 6 dadurch, daß der Sattelteil 4 nicht plan an dem Bremsbelag 2 anliegt, sondern daß der Bremsbelag 2 in eine Ausnehmung 6 des Sattelteils 4 aufgenommen ist. Dadurch wird dem Bremsbelag 2 weiterer Halt gegeben, was insbesondere dann vorteilhaft sein kann, wenn der Abstand B nach Fig. 8 sehr groß ist.

Die Funktion der erfindungsgemäßen Scheibenbremse ergibt sich bereits aus der obigen Beschreibung der Ausführungsbeispiele. Die Montage/Demontage des Bremsbelags 2 bzw. mehrerer Bremsbeläge in den entsprechenden Öffnungen 3 des Belagträgers 1 ist denkbar einfach. Ein simples Einschieben in die Öffnung 3 genügt. Ist der Sattelteil 4 beim Montieren des Bremsbelages 2 weit genug von der Bremsscheibe 7 entfernt, kann der Bremsbelag 2 in der Bremse von der bremsscheibenzugewandten Seite des Belagträgers 1 her eingeschoben werden. Wenn ausreichend Platz vorhanden ist, kann der Bremsbelag 2 auch in der Bremse von der bremsscheibenabgewandten Seite her eingeschoben werden. Wenn es jedoch beispielsweise enge Einbauverhältnisse erforderlich machen, wird der Belagträger 1 ausgebaut und der Bremsbelag 2 wird außerhalb der Bremse ausgetauscht. In einem solchen Fall kann der Bremsbelag 2 dann selbstverständlich sowohl von der bremsscheibenabgewandten als auch von der bremsscheibenzugewandten Seite her in den Belagträger 1 eingeschoben werden.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse für ein Landfahrzeug, mit
einer Bremsscheibe (7),
mindestens einem Bremsbelag (2), der bei Betätigung der Bremse in einer vorbestimmten Richtung (A) gegen die Bremsscheibe (7) gedrückt wird, und
mindestens einem Belagträger (1), der den Bremsbelag (2) unmittelbar trägt und die beim Bremsen an dem Bremsbelag (2) auftretenden Reibkräfte aufnimmt, wobei
a) der Bremsbelag (2) in einer Durchgangsöffnung (3) in dem Belagträger (1) angeordnet ist,
b) die bei Betätigung der Bremse auftretende Zuspannkraft (Fz) zwar auf den Bremsbelag (2), nicht aber auf den Belagträger (1) wirkt und
c) der Belagträger (1) im Betrieb bezüglich einer Bewegung in der vorbestimmten Richtung (A) mit dem Bremsbelag (2) gekoppelt ist.

2. Scheibenbremse nach Anspruch 1, dadurch gekennzeichnet, daß die Begrenzungswand der Durchgangsöffnung (3) einen den Bremsbelag (2) in einer parallel zur Hauptebene (S) der Bremsscheibe (7) liegenden Ebene vollständig umschließenden Rahmen bildet.

3. Scheibenbremse nach Anspruch 1 oder 2, dadurch gekennzeichnet, daß der Bremsbelag (2) zumindest abschnittweise eine Außenkontur hat, die durch die Durchgangsöffnung (3) hindurchpaßt.

4. Scheibenbremse nach Anspruch 3, dadurch gekennzeichnet, daß ein in eingebautem Zustand der Bremsscheibe (7) zugewandter Endabschnitt des Bremsbelages (2) eine Außenkontur hat, die durch die Durchgangsöffnung (3) hindurchpaßt.

5. Scheibenbremse nach einem der vorangehenden Ansprüche, dadurch gekennzeichnet, daß sich der Belagträger (1) und der Bremsbelag (2) mit jeweils einem der Bremsscheibe (7) abgewandten Anlagebereich an einem sich beim Zuspannen mit dem Bremsbelag (2) bewegenden Element (4) abstützen.

6. Scheibenbremse nach einem der vorangehenden Ansprüche, gekennzeichnet durch eine Halterung (5) des Belagträgers (1) zum Koppeln mit dem Bremsbelag (2) bezüglich einer Bewegung in der vorbestimmten Richtung (A).

7. Scheibenbremse nach Anspruch 6, dadurch gekennzeichnet, daß die Halterung (5) den Belagträger an einem sich beim Zuspannen mit dem Bremsbelag (2) bewegenden Element (4) hält.

8. Scheibenbremse nach Anspruch 6 oder 7, dadurch gekennzeichnet, daß die Halterung (5) lösbar ist.

9. Scheibenbremse nach einem der Ansprüche 6 bis 8, dadurch gekennzeichnet, daß die Halterung (5) im Sinne einer Veränderung der in Axialrichtung der Bremse gesehenen Relativlage des Belagträgers (1) bezüglich eines sich beim Zuspannen mit dem Bremsbelag (2) bewegenden Elements (4) verstellbar ist.

10. Scheibenbremse nach einem der vorangehenden Ansprüche, dadurch gekennzeichnet, daß die Durchgangsöffnung (3) eine kreisförmige Innenkontur hat und der Bremsbelag (2) eine im Querschnitt kreisförmige Außenkontur hat.

11. Scheibenbremse nach einem der vorangehenden Ansprüche, dadurch gekennzeichnet, daß die Durchgangsöffnung (3) eine nierenförmige Innenkontur hat und der Bremsbelag (2) eine im Querschnitt nierenförmige Außenkontur hat.

12. Scheibenbremse nach einem der vorangehenden Ansprüche, dadurch gekennzeichnet, daß der Belagträger (1) plattenförmig ist.

13. Scheibenbremse nach einem der vorangehenden Ansprüche, dadurch gekennzeichnet, daß der Belagträger (1) zum Tragen von zwei oder mehr Bremsbelägen (2) ausgelegt ist.

14. Scheibenbremse nach einem der vorangehenden Ansprüche, dadurch gekennzeichnet, daß ein die Zuspannkraft (Fz) auf den Bremsbelag (2) übertragendes Element (4) eine Ausnehmung (6) mit einer Innenkontur hat, die der Außenkontur des in eingebautem Zustand der Bremsscheibe (7) abgewandten Endabschnitts des Bremsbelages (2) entspricht.
